# EUROPEAN PATENT SPECIFICATION

(11) **EP 3 671 668 B1**
(45) Date of publication and mention of the grant of the patent: **07.06.2023**
(21) Application number: 18465643.7
(22) Date of filing: 18.12.2018
(51) Int. Cl.: G07C 9/00, B60R 25/24, B60R 25/01

(54) **ELECTRONIC KEY AND METHOD FOR OPERATING AN ELECTRONIC KEY**
ELEKTRONISCHER SCHLÜSSEL UND VERFAHREN ZUM BETRIEB EINES ELEKTRONISCHEN SCHLÜSSELS
CLÉ ÉLECTRONIQUE ET PROCÉDÉ DE FONCTIONNEMENT ASSOCIÉ

(43) Date of publication of application: 24.06.2020
(73) Proprietor: Continental Automotive Technologies GmbH, 30165 Hannover (DE)
(72) Inventor: Stef, Adrian Viorel, 300756 Timisoara (RO); Onea, George, 300722 Timisoara (RO)
(74) Representative: Continental Corporation

(56) References cited:
- EP-A1- 2 612 795
- EP-A1- 3 376 475
- US-A1- 2014 313 011
- US-A1- 2017 352 211

## Description

The current invention relates to an electronic key and a related method for operating an electronic key, in particular an electronic key for a vehicle.

Most vehicles today may be unlocked and started using an electronic key. Some start and access systems are known in which the user needs to press an unlocking button on the electronic key to unlock the vehicle. In order to start the vehicle, the key usually has to be inserted into an arrangement which replaces the ignition switch, as is known from older vehicles. Other start and access systems are known in which the vehicle may be unlocked and started without the user having to press a button or having to insert the key in any arrangement. Such start and access systems are often called keyless start and entry systems. With keyless start and entry systems, the vehicle may be unlocked automatically when the key is detected within a certain distance from the vehicle. In order to start the vehicle, a start button within the vehicle usually has to be pressed.

Many other start and entry systems are known. However, most of these systems exhibit certain security risks. One of the risks, for example, are so-called relay attacks. In a relay attack, an unauthorized person places a first device in proximity of the vehicle and a second device in proximity to the related vehicle key. Messages that are sent between the vehicle and the vehicle key may be relayed over long distances that are significantly longer than the usual range of the signals. This allows the unauthorized person to unlock and even start the vehicle, even if the electronic key itself is not in proximity of the vehicle.

Some electronic keys, therefore, comprise motion sensors. If the electronic key receives a signal from the vehicle, it is detected whether the electronic key is presently in motion or not. If no motion of the electronic key is detected when a signal is received from the vehicle, this is seen as an indication that the owner of the vehicle is presently not moving towards the vehicle. Therefore, access to the vehicle may be denied if no motion of the electronic key is detected. For such systems, it is important that they provide an effective protection against relay attacks without reducing user comfort.

Document US 2017/352211 A1 discloses a relay attack deterrence system including a mobile platform including a plurality of mobile platform transmitter components and a mobile platform receiver component provided therein. The system further includes a fob device having a fob receiver component, a fob transmitter component, and a motion sensor component configured to produce motion information. The fob device is configured to receive, at the fob receiver component, one or more first signals from at least one of the plurality of mobile platform transmitter components, and to selectably transmit, to the mobile platform receiver component, a second signal based on the motion information and position information derived from the one or more first signals.

There is a need to provide an improved electronic key and method which provide affective protection against relay attacks without reducing user comfort.

This problem is solved by an electronic key according to claim 1 and a method according to claim 3. Configurations and further developments of the invention are the subject of the dependent claim.

An electronic key for a vehicle includes a motion sensor configured to detect a movement of the electronic key, a processing unit, and a transceiver unit configured to transmit signals to and receive signals from the vehicle. Upon receiving a first message from the vehicle that includes at least one of information that at least one door of the vehicle is open and that a request to lock the vehicle has been received, the processing unit is configured to, if it is detected by the motion sensor that the electronic key is not moving, and if the electronic key is detected to be outside the vehicle, switch the transceiver unit from an enabled state to a disabled state such that no signals may be received from the vehicle. The processing unit is further configured to, if it is detected by the motion sensor that the electronic key is not moving, and if the electronic key at the same time is detected to be inside the vehicle, keep the transceiver unit in the enabled state.

In this way, relay attacks may be reliably prevented while the user comfort is increased.

Preventing the electronic key from switching to a disabled state after such kind of triggering event may reduce the risk of locking the electronic key into the vehicle and at the same time disabling the electronic key.

The electronic key is further configured to, after receiving a first message from the vehicle that includes at least one of information that at least one door of the vehicle is open, and that a request to lock the vehicle has been received, detect whether the electronic key is moving, and, if no movement of the electronic key has been detected, send a response message to the vehicle that includes information concerning the non-movement of the electronic key, start a timer, and wait for a second message from the vehicle, the second message including information that the electronic key has been detected inside the vehicle.

In this way, the electronic key may confirm that it is not located inside the vehicle before entering the disabled state.

The electronic key is further configured to stop the timer if the timer has elapsed without receiving the second message, and disabling the transceiver unit, if the electronic key has been detected not to be moving.

If no second message is received within the timer running time, this is seen as an indication that the electronic key is not located inside the vehicle and may be disabled, if not moving. By disabling the electronic key, the risk of relay attacks may be decreased and energy consumption may be reduced.

The electronic key is further configured to stop the timer if a second message has been received before the timer has elapsed.

Receiving the second message while the timer has not elapsed may be seen as an indication that the electronic key is located inside the vehicle. By not allowing the electronic key to be disabled in such cases, user comfort may be increased.

The motion sensor may comprise an acceleration sensor or a gyrometer.

The motion sensor may be easily implemented in this way and provides reliable results.

An electronic key for a vehicle includes a motion sensor, a processing unit, and a transceiver unit. A method for operating the electronic key includes, upon occurrence of a triggering event, detecting, by means of the motion sensor, whether the electronic key is moving, and detecting whether the electronic key is located inside the vehicle or outside the vehicle. If it is detected that the electronic key is located outside the vehicle and that the electronic key is not moving, the transceiver unit is disabled such that it is not able to receive signals from the vehicle. If it is detected that the electronic key is located inside the vehicle, the transceiver unit is kept in an enabled state regardless of whether the electronic key is detected not to be moving. In the enabled state, the transceiver unit is able to receive signals from and to send signals to the vehicle.

Detecting whether the electronic key is moving is performed in response to receiving a first message from the vehicle that includes at least one of information that at least one door of the vehicle is open, and that a request to lock the vehicle has been received.

The method further comprises, after receiving the first message from the vehicle, and if no movement of the electronic key has been detected, sending a response message to the vehicle that includes information concerning the non-movement of the electronic key, starting a timer, and waiting for a second message from the vehicle, the second message including information that the electronic key has been detected inside the vehicle.

The method further comprises stopping the timer if a second message has been received before the timer has elapsed, and subsequently preventing the transceiver unit from being disabled.

Examples are now explained with reference to the drawings. In the drawings the same reference characters denote like features.
Figure 1 illustrates the general principle of an electronic vehicle key.
Figure 2 schematically illustrates in a block diagram an electronic key according to the present invention.
Figure 3 schematically illustrates a top view of a vehicle.
Figure 4 schematically illustrates in a process diagram a method for operating an electronic key according to the present invention.
Figure 5 schematically illustrates in a sequence diagram a method for operating an electronic key according to the present invention.
Figure 6 schematically illustrates in a sequence diagram a method for operating an electronic key according to the present invention.
Figure 7 schematically illustrates in a sequence diagram a method for operating an electronic key according to the present invention.
Figure 8 exemplarily illustrates in a flow diagram a method according to the present invention.

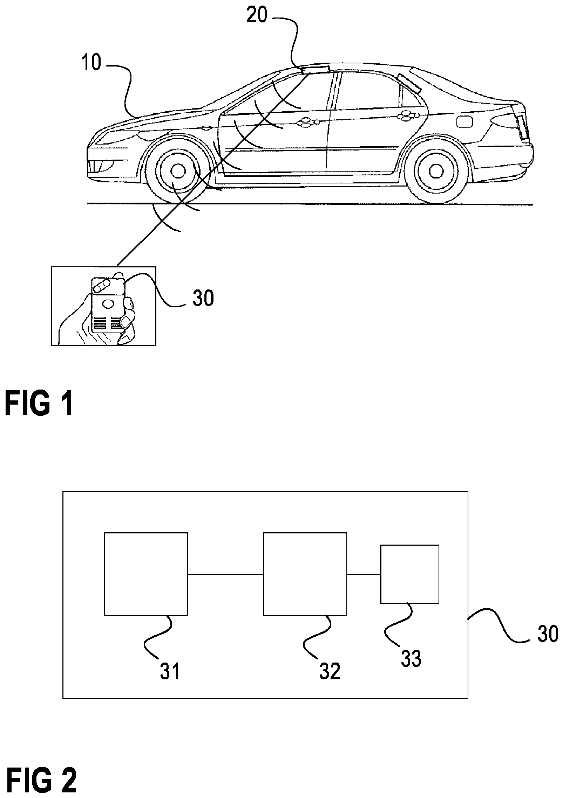

Figure 1 illustrates a vehicle 10 with a keyless start and entry system. The start and entry system comprises a control unit 20. The control unit 20 may be arranged anywhere within or on the vehicle 10. The control unit 20 is configured to trigger an unlocking or engine start process if an electronic key belonging to the vehicle 10 is detected near or inside the vehicle 10. The control unit 20 sends out inquiry signals. Such inquiry signals are usually low frequency (about 20kHz to 200kHz) signals.

The inquiry signals are coded with a first coding chart. The inquiry signals may be received by a transponder unit 30 if the transponder unit 30 is within the range of the signals. The transponder unit 30 decodes, analyses and/or further processes the inquiry signals. After further processing the inquiry signals, the transponder unit 30 sends response signals back to the control unit 20. The response signals are coded with a second coding chart. The response signals may be generated by means of load modulation, for example, and may be decoded within the vehicle 10.

The vehicle 10 knows both coding charts and compares the original inquiry signals with the received response signals. If the response signals are identified as being correct, the vehicle 10 may be unlocked. If a start button is pressed and the response signals are identified as being correct, the vehicle 10 may be started. If, after sending the inquiry signals, no response signals or incorrect response signals are received within a certain time, nothing happens and the vehicle 10 remains locked and/or turned off.

The transponder unit 30 may be arranged within an electronic vehicle key or a portable device such as a mobile phone, for example, which the user of the vehicle 10 carries with him and which is configured to replace the electronic vehicle key and perform the typical actions of an electronic vehicle key. The control unit 20 may send out inquiry signals in regular intervals or in response to a certain trigger event. Such a trigger event may be the user touching the door handle or pressing a start button, for example. The vehicle 10 may be any kind of vehicle, for example a passenger car, a truck, a bus, a train, a tractor, a motorcycle, a boat, or an aircraft.

In order to be able to more reliably protect the keyless start and entry system from so-called relay attacks, the vehicle 10 may only be unlocked when the transponder unit 30 is moving. In a relay attack, an unauthorized person places a first device in proximity of the vehicle 10 and the control unit 20, and a second device in proximity to the related transponder unit 30. In this way, messages that are sent between the vehicle 10 and the control unit 30 may be relayed over long distances that are significantly longer than the usual range of the signals. This allows the unauthorized person to unlock and even start the vehicle 10, even if the transponder unit 30 itself is not in proximity of the vehicle 10.

In many cases, relay attacks happen when the user is at home. That is, the user arrives at home and places his vehicle key at a key hook or on a shelf close to the front door, for example. For an unauthorized person it is then very easy to relay the messages sent from the vehicle 10 to the transponder unit 30 in the vehicle key, as the vehicle 10 is usually parked in close proximity in front of the house. In some cases, the vehicle key is even placed at a location within the house which is still within the usual range of the vehicle's inquiry signals. In such cases it might not even be necessary for an unauthorized person to relay the messages.

Therefore, the transponder unit 30 comprises a motion sensor 31, as is schematically illustrated in the block diagram of Figure 2. When a user arrives at home or at work, for example, and sets aside the vehicle key with the transponder unit 30, the transponder unit 30 usually does not move for a certain amount of time (e.g., several hours). When a user picks up his vehicle key and then walks towards the vehicle 10 with the intention of using it, a movement of the vehicle key may be detected. Therefore, if no movement of the transponder unit 30 is detected, this may be seen as an indication that the user does not intent to unlock and use his vehicle. On the other hand, if movement of the transponder unit 30 is detected, this may be seen as an indication that the user intents to unlock and use the vehicle 10.

The motion sensor 31, therefore, is configured to detect whether the transponder unit 30 is moving or not. The motion sensor 31 may comprise an acceleration sensor and/or a gyrometer, for example. Different motion sensors are known in the art and will not be described in further detail herein. The transponder unit 30 may further comprise a processing unit 32 coupled to the motion sensor 31.

When the transponder unit 30 receives an inquiry signal from a vehicle 10 or upon another triggering event, it may be detected whether the transponder unit 30 is presently moving or not, before further processing the inquiry signal and possibly sending out a response signal to the vehicle 10. For example, a motion of the transponder unit 30 may be detected by means of the motion sensor 31 and, when the detected motion is below a predefined threshold, the transponder unit 30 may be considered as not moving. If the detected motion is above the predefined threshold, the transponder unit 30 may be considered as moving.

If the transponder unit 30 is detected as not moving, a transceiver unit 33 of the transponder unit 30 may be disabled. The transceiver unit 33 may comprise at least one antenna, for example (not illustrated). The transceiver unit 33, in an enabled state, is configured to transmit signals to and to receive signals from the vehicle 10. If the transponder unit 30 does not move and it is considered that the user does not intend to use the vehicle 10, the processing unit 32 may switch the transceiver unit 33 from the enabled state to a disabled state. In the disabled state, the transceiver unit 33 is switched off such that it is no longer able to receive signals from the vehicle 10.

According to one example, the transceiver unit 33 may be disabled if the transponder unit 30 did not move for a certain amount of time. For example, if the transponder unit did not move for several seconds or several minutes, the transceiver unit 33 may be disabled. Disabling the transceiver unit 33 when not needed not only reduces the risk of relay attacks but also reduces the energy consumption of the transponder unit 30, because not all of the units are active the whole time.

However, disabling the transceiver unit 33 when the transponder unit 30 is detected to not be moving may decrease user comfort. This is, because in some situations the vehicle may not be unlocked or started even if the user intents to do so. On the other hand, there might be a risk that the electronic vehicle key with the transponder unit 30 gets locked into the vehicle 10, with the user being outside the vehicle 10.

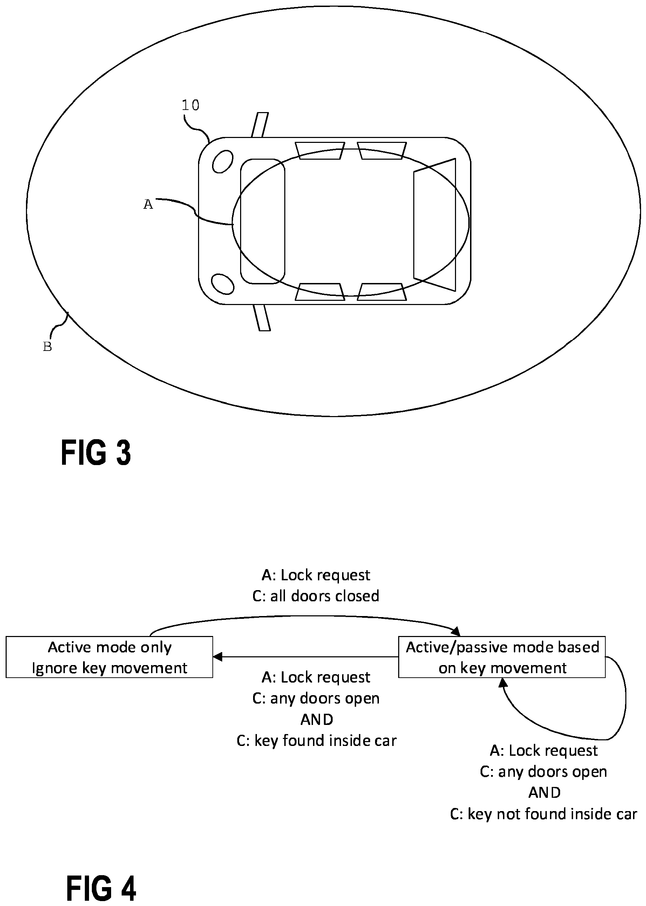

Now referring to Figure 3, a top view of a vehicle 10 is schematically illustrated. Many vehicles 10 today may detect whether the corresponding transponder unit 30 is inside the vehicle 10 (zone A in Figure 3) or outside the vehicle 10 (zone B in Figure 3).

Now referring to Figure 4, the operation of a transponder unit 30 according to one example is schematically illustrated. As has been described above, the transceiver unit 33 may be in an active (or enabled) mode, or in a passive (or disabled) mode. If a request to lock the vehicle 10 is received, and if at the same time at least one door of the vehicle 10 is determined to be open and the transponder unit 30 is detected to be inside the vehicle 10, the transceiver unit 33 may be prevented from switching into the disabled mode, even if the transponder unit 30 is detected not to be moving. In this way, it may be prevented that the vehicle key is still inside the vehicle 10 when the vehicle 10 is locked. In known systems, if the vehicle key is inside the vehicle 10 after locking the vehicle 10, and it is subsequently detected that the vehicle key is not moving, the vehicle key would disable the transceiver unit 33 and the user would no longer be able to unlock the vehicle 10. As a consequence, the user would not have access to the vehicle key and, therefore, is no longer able to move the vehicle key and enable the transceiver unit. Such situations are prevented in the system described in Figure 4.

Still referring to Figure 4, if a request to lock the vehicle 10 is received and at the same time all doors are closed, the transceiver unit 33 may generally be enabled or disabled based on the detected movement of the transponder unit 30 (moving/not moving). However, if the transponder unit 30 is detected inside the vehicle 10, disabling of the transceiver unit 33 again may be prevented. If a request to lock the vehicle 10 is received, if at the same time at least one door of the vehicle 10 is determined to be open and the transponder unit 30 is detected to be outside the vehicle 10, the transceiver unit 33 may be disabled or enabled based on their current status (moving or not moving). Therefore, if the transponder unit 30 is detected to be outside the vehicle 10, the transceiver unit 33 is enabled or disabled based on the detection whether it is moving or not to increase the safety of the system and reduce the risk of relay attacks.

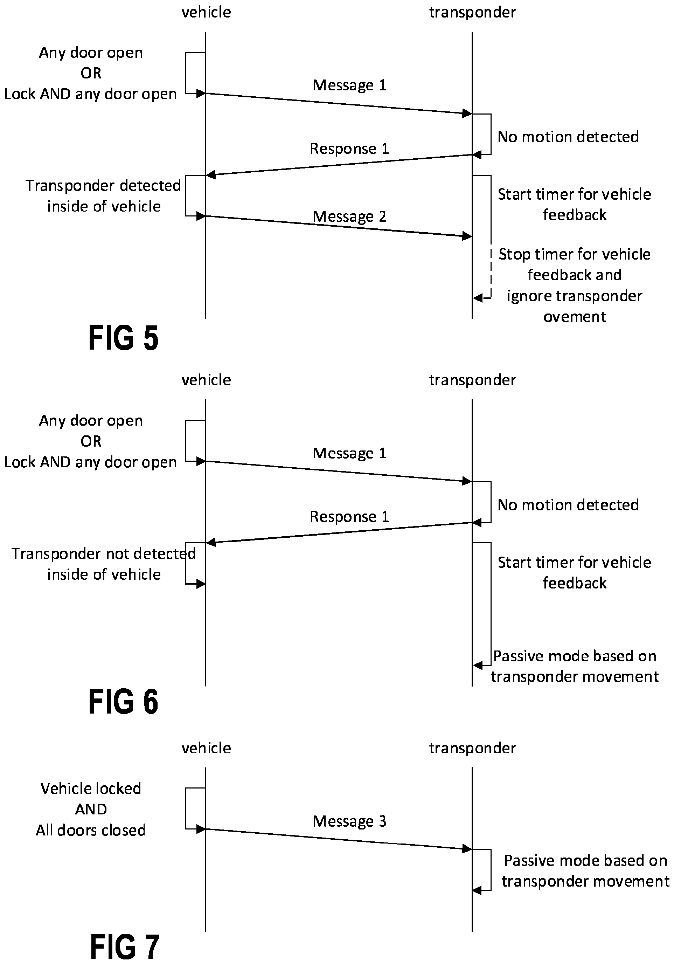

In the following, different exemplary scenarios will be described with respect to the sequence diagrams of Figures 5 - 7.

Referring to Figure 5, the vehicle 10 may send a first message to the transponder unit 30, if any door of the vehicle 10 is detected to be open or if a lock request is received and in addition any door of the vehicle 10 is detected to be open. The first message may include a request whether the transponder unit 30 is moving or not. When the transponder unit 30 receives the first message, it detects whether it is moving or not. If not motion is detected (transponder unit 30 considered not to be moving), the transponder unit sends a response signal to the vehicle 10. The response signal includes an information that the transponder unit 30 is not moving. At the same time, the transponder unit 30 may start a timer and wait for feedback from the vehicle 10. The vehicle 10 receives the response signal and subsequently detects whether the transponder unit 30 is inside or outside the vehicle 10. If the transponder unit 30 is detected inside the vehicle, the vehicle 10 sends a second message to the transponder unit 30. The second message 10 includes information that the transponder unit 30 has been detected inside the vehicle 10. When receiving the second message, the transponder unit 30 may stop the timer and may ignore the detected non-movement of the transponder unit 30. That is, the transceiver unit 33 will not be disabled, even if the transponder unit 30 is detected to not moving.

Now referring to Figure 6, the vehicle 10 may send a first message to the transponder unit 30, if any door of the vehicle 10 is detected to be open or if a lock request is received and in addition any door of the vehicle 10 is detected to be open. The first message may include a request whether the transponder unit 30 is moving or not. When the transponder unit 30 receives the first message, it detects whether it is moving or not. If not motion is detected (transponder unit 30 considered not to be moving), the transponder unit sends a response signal to the vehicle 10. The response signal includes an information that the transponder unit 30 is not moving. At the same time, the transponder unit 30 may start a timer and wait for feedback from the vehicle 10. The vehicle 10 receives the response signal and subsequently detects whether the transponder unit 30 is inside or outside the vehicle 10. If the transponder unit 30 is detected outside the vehicle 10, the vehicle 10 may not send a second message to the transponder unit 30. When the timer is expired and no second message has been received from the vehicle 10, the transponder unit 30 knows that it is outside the vehicle 10. It may subsequently disable the transceiver unit 33 if no movement of the transponder unit 30 is detected. The timer may expire, e.g., after several milliseconds or several seconds.

Now referring to Figure 7, the vehicle 10 may send a third message to the transponder unit 30, if the vehicle 10 is locked and all doors of the vehicle 10 are closed. The third message may include an information that the vehicle 10 is locked and the doors are closed. When the transponder unit 30 receives the third message, it may disable or enable the transceiver unit 33 irrespective of whether the transponder unit 30 is located inside or outside the vehicle 10.

The first message, the second message and the third message may be LF (low frequency) signals, for example. The response signal of the transponder unit 30 may be a RF (radio frequency) signal, for example. That is, the signals may be sent in different frequency bands depending on whether they are sent from the vehicle 10 to the transponder unit 30 or from the transponder unit 30 to the vehicle 10.

All messages and response messages may be encrypted in order to increase security of the system. Known encryption methods may be used to encrypt the messages.

Detecting whether the transponder unit 30 is located inside the vehicle 10 or outside the vehicle 10 may be done in any suitable way. For example, it may be detected whether the transponder unit 30 is inside the vehicle by determining the signal strengths of signals sent between the vehicle 10 and the transponder unit 30. If, for example, signals are sent between the transponder unit 30 and at least three antennas located within the vehicle 10, and the respective signals strengths are determined, it may be further determined whether the transponder unit 30 is located inside the vehicle 10 by means of suitable trilateration or multilateration methods. According to another example, an antenna may be arranged in the passenger compartment inside the vehicle 10. A signal sent by this antenna may only be received by the transponder unit 30, if it is also inside the vehicle 10. Signals sent by this antenna may only have a low strength such that their range is very short (only inside the vehicle 10). A detection whether the transponder unit 30 is inside the vehicle 10 or outside the vehicle 10 may also be based on previous movements of the transponder unit and previous actions of the user of the transponder unit 30. Any suitable detection methods may be used.

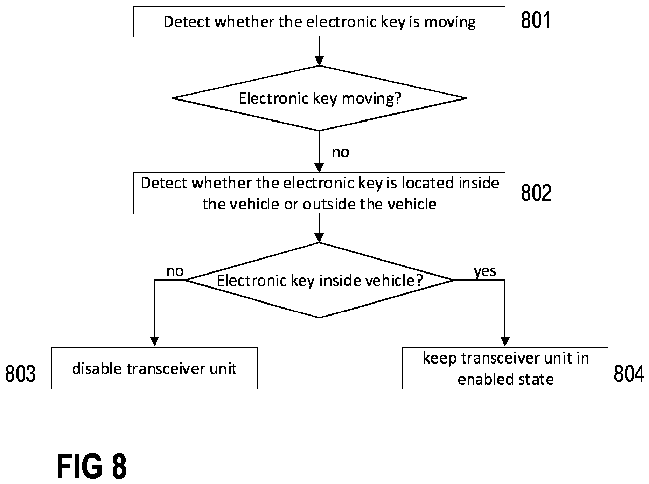

Figure 8 exemplarily illustrates a method for operating an electronic key 30 for a vehicle 10 according to one embodiment of the present invention. The electronic key 30 comprises a motion sensor 31, a processing unit 32, and a transceiver unit 33. The method comprises detecting, by means of the motion sensor 31, whether the electronic key is moving (step 801). The method further comprises detecting whether the electronic key 30 is located inside the vehicle 10 or outside the vehicle 10 (step 802). If it is detected that the electronic key 30 is located outside the vehicle 30 and that the electronic key 30 is not moving, the transceiver unit 33 is disabled such that it is not able to receive signals from the vehicle 10 (step 803). If it is detected that the electronic key 30 is located inside the vehicle 10, the transceiver unit 33 is kept in an enabled state regardless of whether the electronic key 30 is detected not to be moving, wherein the transceiver unit 33 in the enabled state is able to receive signals from and to send signals to the vehicle (step 804).

### List of reference signs

- 10: vehicle
- 20: control unit
- 30: electronic key
- 31: motion sensor
- 32: processing unit
- 33: transceiver unit

## Claims

1. An electronic key (30) for a vehicle (10) comprises
a motion sensor (31) configured to detect a movement of the electronic key (30);
a processing unit (32); and
a transceiver unit (33) configured to transmit signals to and receive signals from the vehicle (10); wherein,
upon receiving a first message from the vehicle (10) that includes at least one of information that at least one door of the vehicle (10) is open, and that a request to lock the vehicle (10) has been received, the electronic key (30) is further configured to detect whether the electronic key (30) is moving,
if no movement of the electronic key (30) has been detected, the electronic key (30) is configured to:
send a response message to the vehicle (10) that includes information concerning the non-movement of the electronic key (30), start a timer, and wait for a second message from the vehicle (10), the second message including information that the electronic key (30) has been detected inside or outside the vehicle (10),
wherein the electronic key (30) is configured to stop the timer if a second message has been received before the timer has elapsed;
and subsequently the processing unit (32) is configured to, if the electronic key (30) is detected to be inside the vehicle (10), keep the transceiver unit (33) in the enabled state; and
if the electronic key (30) is detected to be outside the vehicle (10), switch the transceiver unit (33) from an enabled state to a disabled state such that no signals may be received from the vehicle (10), and
wherein the electronic key (30) is further configured to
stop the timer if the timer has elapsed without receiving the second message;
and subsequently the processing unit is further configured to, switch the transceiver unit (33) from an enabled state to a disabled state such that no signals may be received from the vehicle (10).

2. The electronic key (30) of claim 1, wherein the motion sensor (31) comprises an acceleration sensor or a gyrometer.

3. A method for operating an electronic key (30) for a vehicle (10), the electronic key (30) comprising a motion sensor (31), a processing unit (32), and a transceiver unit (33) wherein the transceiver unit in an enabled state is able to receive signals from and to send signals to the vehicle (10), the method comprises
in response to receiving a first message by the electronic key (30) from the vehicle (10) that includes at least one of information that at least one door of the vehicle is open, and that a request to lock the vehicle (10) has been received, detecting, by means of the motion sensor (31), whether the electronic key (30) is moving;
sending a response message by the electronic key (30) to the vehicle (10) that includes information concerning the non-movement of the electronic key (30); and
starting a timer by the electronic key (30), and waiting for a second message from the vehicle (10), the second message including information that the electronic key (30) has been detected inside or outside the vehicle; and
if the timer has elapsed without receiving the second message disable the transceiver unit such that it is not able to receive signals from the vehicle; and
**if the second message has been received before the timer has elapsed, stopping the timer:**
wherein if it is detected that the electronic key (30) is located outside the vehicle (30) and that the electronic key (30) is not moving, the processing unit (32) disables the transceiver unit (33) such that it is not able to receive signals from the vehicle (10), and
if it is detected that the electronic key (30) is located inside the vehicle (10), the processor unit (32) keeps the transceiver unit (33) in an enabled state regardless of whether the electronic key (30) is detected not to be moving.

## Patentansprüche

1. Ein elektronischer Schlüssel (30) für ein Fahrzeug (10) Folgendes aufweisend:
einen Bewegungssensor (31), der zum Erkennen einer Bewegung des elektronischen Schlüssels (30) ausgebildet ist;
eine Verarbeitungseinheit (32); und
eine Transceivereinheit (33), die zum Übertragen von Signalen an das Fahrzeug (10) und Empfangen von Signalen von ihm ausgebildet ist; wobei
der elektronische Schlüssel (30) nach dem Empfangen einer ersten Nachricht von dem Fahrzeug (10), die mindestens eine der Informationen enthält, dass mindestens eine Tür des Fahrzeugs (10) offen ist und dass eine Aufforderung zum Verschließen des Fahrzeugs (10) empfangen worden ist, ferner zum Erkennen, ob sich der elektronische Schlüssel (30) momentan bewegt, ausgebildet ist,
wenn keine Bewegung des elektronischen Schlüssels (30) erkannt worden ist, der elektronische Schlüssel (30) zu Folgendem ausgebildet ist: Senden einer Antwortnachricht an das Fahrzeug (10), die Informationen bezüglich der Nichtbewegung des elektronischen Schlüssels (30) enthält, Starten eines Timers und Warten auf eine zweite Nachricht von dem Fahrzeug (10), wobei die zweite Nachricht die Information enthält, dass der elektronische Schlüssel (30) innerhalb oder außerhalb des Fahrzeugs (10) erkannt worden ist,
wobei der elektronische Schlüssel (30) zum Stoppen des Timers, wenn eine zweite Nachricht empfangen worden ist, bevor der Timer abgelaufen ist, ausgebildet ist;
und die Verarbeitungseinheit (32) zum anschließenden Halten der Transceivereinheit (33) im eingeschalteten Zustand, wenn erkannt wird, dass der elektronische Schlüssel (30) innerhalb des Fahrzeugs (10) ist, und,
wenn erkannt wird, dass der elektronische Schlüssel (30) außerhalb des Fahrzeugs (10) ist, zum Umschalten der Transceivereinheit (33) aus einem eingeschalteten Zustand in einen ausgeschalteten Zustand, sodass keine Signale von dem Fahrzeug (10) empfangen werden können, ausgebildet ist, und
wobei der elektronische Schlüssel (30) ferner zum Stoppen des Timers, wenn der Timer abgelaufen ist, ohne dass die zweite Nachricht empfangen worden ist, ausgebildet ist;
und wobei die Verarbeitungseinheit ferner zum anschließenden Umschalten der Transceivereinheit (33) aus einem eingeschalteten Zustand in einen ausgeschalteten Zustand, sodass keine Signale von dem Fahrzeug (10) empfangen werden können, ausgebildet ist.

2. Elektronischer Schlüssel (30) nach Anspruch 1, wobei der Bewegungssensor (31) einen Beschleunigungssensor oder ein Gyrometer aufweist.

3. Verfahren zum Betreiben eines elektronischen Schlüssels (30) für ein Fahrzeug (10), wobei der elektronische Schlüssel (30) einen Bewegungssensor (31), eine Verarbeitungseinheit (32) und eine Transceivereinheit (33) aufweist, wobei die Transceivereinheit in einem eingeschalteten Zustand dazu fähig ist, Signale von dem Fahrzeug (10) zu empfangen und an es zu senden, wobei das Verfahren Folgendes aufweist:
als Antwort auf das Empfangen einer ersten Nachricht durch den elektronischen Schlüssel (30) von dem Fahrzeug (10), die mindestens eine der Informationen enthält, dass mindestens eine Tür des Fahrzeugs offen ist und dass eine Aufforderung zum Verschließen des Fahrzeugs (10) empfangen worden ist, Erkennen mittels des Bewegungssensors (31), ob sich der elektronische Schlüssel (30) momentan bewegt;
Senden einer Antwortnachricht durch den elektronischen Schlüssel (30) an das Fahrzeug (10), die Informationen bezüglich der Nichtbewegung des elektronischen Schlüssels (30) enthält; und
Starten eines Timers durch den elektronischen Schlüssel (30) und Warten auf eine zweite Nachricht von dem Fahrzeug (10), wobei die zweite Nachricht die Information enthält, dass der elektronische Schlüssel (30) innerhalb oder außerhalb des Fahrzeugs erkannt worden ist; und,
wenn der Timer abgelaufen ist, ohne dass die zweite Nachricht empfangen worden ist, Ausschalten der Transceivereinheit, sodass sie nicht dazu fähig ist, Signale von dem Fahrzeug zu empfangen; und,
**wenn die zweite Nachricht empfangen worden ist, bevor der Timer abgelaufen ist, Stoppen des Timers:**
wobei die Verarbeitungseinheit (32), wenn erkannt wird, dass sich der elektronische Schlüssel (30) außerhalb des Fahrzeugs (30) befindet und dass sich der elektronische Schlüssel (30) momentan nicht bewegt, die Transceivereinheit (33) ausschaltet, sodass sie nicht dazu fähig ist, Signale von dem Fahrzeug (10) zu empfangen, und
die Verarbeitungseinheit (32), wenn erkannt wird, dass sich der elektronische Schlüssel (30) innerhalb des Fahrzeugs (10) befindet, die Transceivereinheit (33) unabhängig davon, ob erkannt wird, dass sich der elektronische Schlüssel (30) momentan nicht bewegt, in einem eingeschalteten Zustand hält.

## Revendications

1. Clé électronique (30) pour un véhicule (10), comprend
un détecteur de mouvement (31) configuré pour détecter un mouvement de la clé électronique (30) ;
une unité de traitement (32) ; et
une unité émetteur-récepteur (33) configurée pour émettre des signaux à destination du véhicule (10) et recevoir des signaux qui en proviennent ;
dès réception d'un premier message en provenance du véhicule (10) qui comporte des informations indiquant qu'au moins une portière du véhicule (10) est ouverte et/ou qu'une demande de verrouillage du véhicule (10) a été reçue, la clé électronique (30) étant configurée en outre pour détecter si la clé électronique (30) est en mouvement ou non,
si aucun mouvement de la clé électronique (30) n'a été détecté, la clé électronique (30) étant configurée pour :
envoyer un message de réponse au véhicule (10) qui comporte des informations concernant l'absence de mouvement de la clé électronique (30), déclencher un temporisateur, et attendre un deuxième message en provenance du véhicule (10), le deuxième message comportant des informations indiquant que la clé électronique (30) a été détectée à l'intérieur ou à l'extérieur du véhicule (10),
la clé électronique (30) étant configurée pour interrompre le temporisateur si un deuxième message a été reçu avant l'expiration du temporisateur ;
et, par la suite, l'unité de traitement (32) étant configurée pour, si la clé électronique (30) est détectée à l'intérieur du véhicule (10), maintenir l'unité émetteur-récepteur (33) à l'état activé ; et
si la clé électronique (30) est détectée à l'extérieur du véhicule (10), commuter l'unité émetteur-récepteur (33) d'un état activé sur un état désactivé de façon à ce qu'aucun signal ne puisse être reçu en provenance du véhicule (10), et
la clé électronique (30) étant configurée en outre pour interrompre le temporisateur en cas d'expiration du temporisateur sans réception du deuxième message ;
et, par la suite, l'unité de traitement étant configurée en outre pour commuter l'unité émetteur-récepteur (33) d'un état activé sur un état désactivé de façon à ce qu'aucun signal ne puisse être reçu en provenance du véhicule (10).

2. Clé électronique (30) selon la revendication 1, dans laquelle le détecteur de mouvement (31) comprend un capteur accéléromètre ou un gyromètre.

3. Procédé pour faire fonctionner une clé électronique (30) pour un véhicule (10), la clé électronique (30) comprenant un détecteur de mouvement (31), une unité de traitement (32) et une unité émetteur-récepteur (33), l'unité émetteur-récepteur, dans un état activé, étant apte à recevoir des signaux en provenance du véhicule (10) et à lui envoyer des signaux, le procédé comprenant
en réponse à la réception d'un premier message par la clé électronique (30) en provenance du véhicule (10) qui comporte des informations indiquant qu'au moins une portière du véhicule est ouverte et/ou qu'une demande de verrouillage du véhicule (10) a été reçue, la détection, au moyen du détecteur de mouvement (31), si la clé électronique (30) est en mouvement ou non ;
l'envoi d'un message de réponse, par la clé électronique (30) au véhicule (10), qui comporte des informations concernant l'absence de mouvement de la clé électronique (30) ; et
le déclenchement d'un temporisateur par la clé électronique (30), et l'attente d'un deuxième message en provenance du véhicule (10), le deuxième message comportant des informations indiquant que la clé électronique (30) a été détectée à l'intérieur ou à l'extérieur du véhicule ; et
en cas d'expiration du temporisateur sans réception du deuxième message, la désactivation de l'unité émetteur-récepteur de façon à ce qu'elle ne puisse pas recevoir de signaux en provenance du véhicule ; et
**en cas de réception du deuxième message avant l'expiration du temporisateur, l'interruption du temporisateur** :
s'il est détecté que la clé électronique (30) est à l'extérieur du véhicule (30) et que la clé électronique (30) n'est pas en mouvement, l'unité de traitement (32) désactivant l'unité émetteur-récepteur (33) de façon à ce qu'elle ne puisse pas recevoir de signaux en provenance du véhicule (10), et
s'il est détecté que la clé électronique (30) est à l'intérieur du véhicule (10), l'unité de traitement (32) maintenant l'unité émetteur-récepteur (33) dans un état activé, qu'il soit détecté que la clé électronique (30) n'est pas en mouvement ou non.
